# EUROPEAN PATENT APPLICATION

(11) **EP 4 668 392 A1**
(43) Date of publication of application: **24.12.2025**
(21) Application number: 24756142.6
(22) Date of filing: 06.02.2024
(51) Int. Cl.: H01M 10/052

(54) **LITHIUM SECONDARY BATTERY CAPABLE OF SELF-POISONING**

(30) Priority: 15.02.2023 US 202363485034 P; 20.10.2023 US 202363591965 P
(71) Applicant: Prologium Technology Co., Ltd., Taoyuan City 320 (TW)
(72) Inventor: YANG, Szu-nan, Taoyuan City 320 (TW)
(74) Representative: Cabinet Chaillot
(86) International application number: PCT/CN2024/076199
(87) International publication number: WO 2024/169768

(57) **Abstract**

The invention provides a lithium secondary battery capable of self-poisoning, which includes a poisonous agent releasing iodine molecules in the lithium secondary battery. The unstable lithium atoms in the lithium secondary battery would be transformed into stable lithium compounds or lithium ions before the temperature of the lithium secondary battery reaches the abnormally high temperature caused by itself. The negative active material of the lithium secondary battery is deactivated to avoid thermal runaway of the lithium secondary battery.

## Description

### BACKGROUND OF THE INVENTION

### Field of Invention

The present invention relates to a lithium secondary battery, in particular to a lithium secondary battery capable of self-poisoning before reaching the abnormally high temperature caused by itself to improve the safety of the lithium secondary batteries.

### Related Art

Because lithium-ion batteries are widely used in various products, such as vehicles, wearable products for consumers and industrial applications, portable devices and energy storage devices and so on, they are almost applied in all areas of human daily life. However, the event of accidents for the lithium-ion batteries are heard from time to time, such as the fire or explosion of mobile phone batteries and electric vehicles. These are all because the lithium ion batteries still lack comprehensive and effective solutions for safety issues.

The main cause of unsafe event for fire or explosion in the lithium secondary batteries is the thermal runaway. And the main cause of the thermal runaway of the lithium batteries is heat, which is the exothermic reactions result from the thermal cracking, induced by the elevated temperature, of the SEI (solid electrolyte interface) film, the electrolyte, the binder, and the positive and negative active materials in the battery. The current methods for suppression thermal runaway can be classified into two types: outside the lithium secondary battery and inside the lithium secondary battery, depending on the activated location for safety mechanism. For the type of outside the lithium secondary battery, a monitoring system is utilized, which uses digital arithmetic simulation. For the type of inside the lithium secondary battery, it can be further divided into physical or chemical methods. In the digital monitoring system outside the lithium secondary battery, the dedicated protection circuit and the dedicated management system on the outside of the lithium secondary battery are utilized to enhance the safety monitoring of the battery during the usage process. For the physical type of inside the lithium secondary battery, such as thermal shutdown separator, at elevated temperature for the battery cell, the holes of the separator are closed to block the passage of the ions. For the chemical type of inside the lithium secondary battery, it can be defined as a scale controlled type or an electrochemical reaction type. In the scale controlled type, the flame retardant is added into the electrolyte to control the scale of the thermal runaway. The examples of the electrochemical reaction types are as follows: 1) The monomer or oligomer is added into the electrolyte. The polymerization will be occurred when the temperature rises to reduce the rate of the ion migration. Therefore, the ionic conductivity decreases as the temperature rises, and the electrochemical reaction rate in the lithium secondary battery slows down; 2) A positive temperature coefficient (PTC) resistance material is sandwiched between the positive electrode layer or the negative electrode layer and the adjacent current collecting layer. When the temperature of the lithium secondary battery is elevated, the electrical insulation ability is enhanced. The electric power transmission efficiency between the positive electrode layer or the negative electrode layer between the adjacent current collecting layer is reduced and the electrochemical reaction rate is also decreased; and 3) A modified layer is formed on the surface of the positive active material. When the temperature of the battery cell is elevated, the modified layer is transformed into a dense film, which increases the resistance of the charge transfer to reduce the electrochemical reaction rate.

However, the above methods are aimed only for passive blocking the ion/electron migration pathway to reduce the heat generation, not for the rationale to cause the thermal runaway to eliminate the thermal runaway.

Therefore, this invention provides a lithium secondary battery capable of self-poisoning to aim at the lithium atoms, with highly activity, in lithium secondary batteries to convert the lithium atoms into stable lithium compounds or lithium ions to solve the problem of thermal runaway from the lithium secondary batteries.

### SUMMARY OF THE INVENTION

It is a main objective of this invention to provide a lithium secondary battery capable of self-poisoning, which includes a poisonous agent. The poisonous agent releases iodine molecules in the lithium secondary battery. When a temperature of the lithium secondary battery reaches a first predetermined temperature, the iodine molecules react with the lithium atoms with high activity to form a stable lithium compounds or lithium ions. The negative active material of the lithium secondary battery is deactivated to achieve harmlessness of the lithium secondary battery to avoid thermal runaway.

In order to implement the abovementioned, this invention discloses a lithium secondary battery capable of self-poisoning, which includes a positive active material; a negative active material, containing lithium atoms; an electrolyte, located between the positive active material and the negative active material to allow lithium ions to move between the positive active material and the negative active material; and a poisonous agent, containing an iodine molecule provider releasing iodine molecules to the negative active material. And at a first predetermined temperature, the iodine molecules react with the negative active material to make lithium atoms with high activity form a stable lithium compounds or lithium ions to make the lithium secondary battery be harmless. The first predetermined temperature is not lower than 80°C.

The following detailed description through specific embodiments are presented to make it easier to understand the purpose, technical content, characteristics and effects of the present invention.

### BRIEF DESCRIPTION OF THE DRAWINGS

FIG. 1(a) is a flow diagram illustrating the poisoning process of the lithium secondary battery capable of self-poisoning of this invention.
FIG. 1(b) is another flow diagram illustrating the poisoning process of the lithium secondary battery capable of self-poisoning of this invention.
FIGS. 2-13 are schematic diagrams of different embodiments, which the poisonous agent is disposed in the lithium secondary battery, of this invention.
FIG. 14 is a schematic diagrams of an embodiment, which the poisonous agent is disposed in the negative active material, of this invention.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

In the following description, the first predetermined temperature is defined as the reaction temperature at which iodine molecules and lithium atoms form stable lithium compounds or lithium ions. The second predetermined temperature is defined as the temperature at which the iodine molecules are released. The third predetermined temperature is defined as the reaction temperature of the second reaction trigger and the first reaction trigger. The third predetermined temperature is lower than the second predetermined temperature.

This invention relates to a lithium secondary battery capable of self-poisoning, which includes a positive active material, a negative active material, an electrolyte and a poisonous agent. The negative active material contains lithium atoms, which are highly active and unstable compared to the positive active material. For example, the matrix of the negative active material is a lithium metal, a material capable of forming an alloy with lithium, such as silicon, or a composite negative active material with a stacked structure composed of a plurality of silicon particles and carbon particles. The preferred condition is that the negative active material is a mixture of crystalline and amorphous states, and the amount of the amorphous portion is more than 10% of the total volume. The optimal particle size of the silicon particles and the carbon particles is 1 nanometer to 10 nanometers, generally at least less than 100 nanometers. The negative active material of the stacked silicon and carbon particles is made by chemical vapor deposition. The measurement of the above-mentioned particle size may use an electron microscope (EM), such as a transmission electron microscope (TEM) or a scanning electron microscope (SEM). The electrolyte is located between the positive active material and the negative active material to allow lithium ions to move between the positive active material and the negative active material. The poisonous agent contains an iodine molecule provider to release iodine molecules at a second predetermined temperature. Therefore, when a temperature of the lithium secondary battery reaches or is near to a first predetermined temperature, the poisonous agent starts to make lithium atoms with high activity form a stable lithium compounds or lithium ions. Thus, the negative active material of the lithium secondary battery is deactivated to achieve so-called "harmlessness" of the lithium secondary battery to avoid thermal runaway. The first predetermined temperature here is greater than 100°C, preferably greater than 120°C. The second temperature is lower or higher than the first preset temperature, which will vary depending on the type of the iodine molecule provider. The stable lithium compound mentioned here may be, for example, lithium iodide, lithium fluoride, lithium iodine compound or lithium fluorine compound, but is not limited thereto. It is well-known that the electrochemical system of a lithium secondary battery is a very complex multi-component structure, and the reactions produced at the first predetermined temperature, which is relatively high temperature, are also relatively complex. Therefore, the stable lithium compound described here is relative to the lithium atom with higher activity, and is not limited to lithium iodide, lithium fluoride, lithium iodine compound or lithium fluorine compound. It may also be said that the lithium compound is anaerobic, non-flammable and stable below 300°C. When the negative active material is lithium metal, it is in the form of thin sheets.

Moreover, because the atoms of the iodine component are larger than the lithium atoms, for negative electrodes that perform lithium insertions/extractions, such as graphite, hard carbon or soft carbon, it is more difficult for iodine molecules to enter the negative electrode structure to form lithium compounds or lithium ions with lithium atoms. That means the poisonous agent in this invention has a poor effect in this type of the negative electrodes.

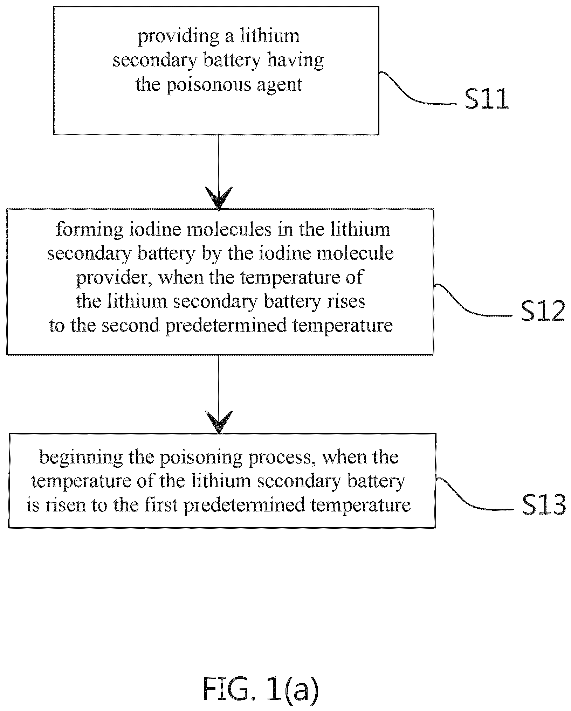

Please refer to FIG. 1(a), which is a flow diagram illustrating the poisoning process of the lithium secondary battery capable of self-poisoning of this invention. The iodine molecule provider used in this embodiment would release iodine molecules at a temperature lower than the first predetermined temperature. First, in the step of S11, a lithium secondary battery having the above-mentioned poisonous agent is provided. Then, in the step of S12, when the temperature of the lithium secondary battery rises to the second predetermined temperature, the iodine molecule provider is triggered or started to form or provide iodine molecules in the lithium secondary battery. In the step of 13, when the temperature of the lithium secondary battery is risen to the first predetermined temperature, the poisoning process will begin. The iodine molecules react with the negative active material containing lithium atoms in the lithium secondary battery to convert the lithium atoms into stable lithium compounds or lithium ions, so as to make the lithium secondary battery be failed and avoid thermal runaway. In the above steps S11 and S12, the lithium secondary battery is a battery which is capable of normal charging and discharging. It also can be said that before the lithium secondary battery is failure in the above step of S13, the lithium secondary battery is in a state of discharging. For example, the discharging state may be caused by external objection puncture. Based on the first predetermined temperature and the second predetermined temperature are the temperature of the lithium secondary battery itself, it can be said that the start of self-poisoning and disabling is completed by the lithium secondary battery itself. The first predetermined temperature is not less than 80°C, but lower than the start temperature to trigger the thermal runaway of the lithium secondary battery that causes by abnormally increasing temperature in itself. For example, the breakdown temperature of the polymer separator is 120°C-150°C, and the thermal runaway temperature of the negative electrode is 200°C to 250°C. Therefore, the first predetermined temperature is greater than 80°C, preferably greater than 100°C, but less than 170°C. It is considered that the breakdown temperature of the polymer separator, the present invention is more suitable for application in a lithium secondary battery in which the separator is an oxide material. The oxide material may be a material to allow or not allow lithium ions transfer.

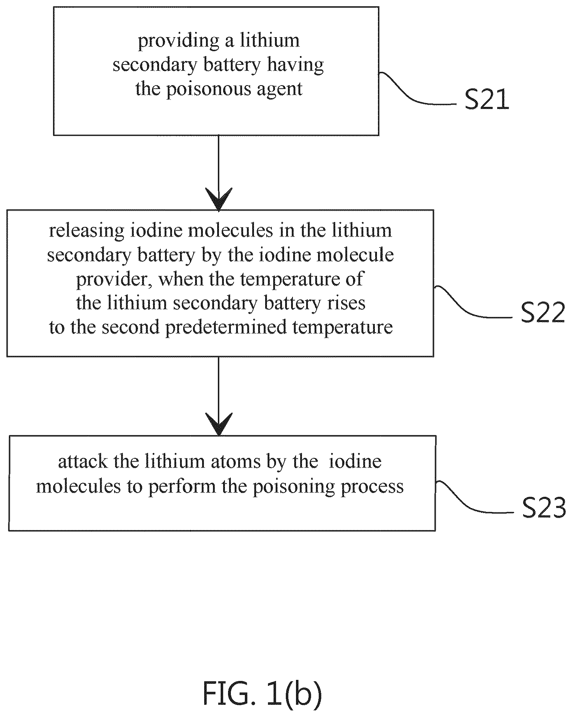

Please refer to FIG. 1(b), which is another flow diagram illustrating the poisoning process of the lithium secondary battery capable of self-poisoning of this invention. The iodine molecule provider used in this embodiment would release iodine molecules at a temperature lower is near to or slightly higher than the first predetermined temperature. Therefore, the thermal runaway temperature of the negative electrode is 200°C to 250°C. Therefore, the second predetermined temperature is not less than the first predetermined temperature. First, in the step of S21, a lithium secondary battery having the above-mentioned poisonous agent is provided. Then, in the step of S22, when the temperature of the lithium secondary battery rises to the second predetermined temperature, the iodine molecule provider is triggered or started to form or provide iodine molecules in the lithium secondary battery. Further, in the step of 23, the temperature of the lithium secondary battery is not less than the first predetermined temperature. Therefore, the released iodine molecules will attack the lithium atoms to perform the poisoning process. The lithium atoms will be converted into stable lithium compounds or lithium ions, so as to make the lithium secondary battery be failed.

Furthermore, the lithium secondary battery capable of self-poisoning of this invention may have two different structures. The first structure is that the electrolyte of the lithium secondary battery does not need a polar medium, and the polar medium here refers to a polar solution or a polymer with polar functional groups. The second structure is that the electrolyte of the lithium secondary battery needs the polar medium.

First, the first structure is described. In the first structure, the iodine molecule provider in the poisonous agent may be 1) pure iodine, which provides iodine molecules in gaseous state through sublimation, 2) a porous adsorption material adsorbed with pure iodine, which can be active carbon, graphene, zeolite or carbon tube, 3) iodide, 4) iodine oxygen derivative, or a mixture of at least two of the above four type of the iodine molecule provider.

Besides, in the first structure, since there is no polar medium, the electrolyte of the lithium secondary battery is in the form of an inorganic solid electrolyte, such as a sulfide solid electrolyte, an oxide solid electrolyte or a metal halide solid electrolyte. In this structure, the inorganic solid electrolyte can serve as the separator of the lithium secondary battery to separate the positive active material from the negative active material. The above-mentioned inorganic solid electrolyte also includes crystalline and amorphous states. In this structure, the iodine molecules are transported to the negative active material in a gas state, and the lithium atoms are converted into the lithium compounds at the first predetermined temperature to achieve stabilization. In this structure, the iodine molecules will not dissociate into iodine ions due to do not have the polar medium. Therefore, the lithium-iodine batteries will not be formed within the lithium secondary battery, thereby avoiding the failure of the lithium secondary battery, which can still operate normally and safely, due to the presence of the lithium-iodine batteries. Moreover, because the iodine molecules are in a gaseous state, they can be transported to the negative active material through the pores, such as the pores of the inorganic solid electrolyte, in the lithium secondary battery. Also, once the temperature of the lithium secondary battery rises to generate the required energy to form the lithium iodine compound, it reacts to deactivate the lithium atoms. The above-mentioned oxide solid electrolyte is selected from lithium aluminum titanium phosphate (LATP), lithium aluminum germanium phosphate (LAGP), lithium lanthanum zirconium oxide (LLZO), LiAlSiO₄ and other oxide solid electrolytes.

The iodide is selected from manganese iodide, copper iodide, cuprous iodide, magnesium iodide, calcium iodide, ammonium iodide, aluminum iodide, hydrogen iodide, or a mixture of two or more of the above materials. The iodine-oxygen derivative is selected from compounds having iodic acid (HIO₃), periodic acid (HIO₄), iodine oxide (XOI), iodate (XIO₃), periodate (XIO₄), iodic acid hydride (XₘHₙ(IO₃)₂), periodic acid hydride (XₘHₙ(IO₆), or a mixture of two or more of the above materials. The above X is a metal element, and m≧1, n≧1. The compound having iodic acid is iodic acid, lithium iodate, barium iodate, strontium iodate, calcium iodate, iron iodate, bismuth iodate, manganese iodate, nickel iodate, or an iodic acid precursor, such as iodine pentoxide (I₂O₅).

When the iodine-oxygen derivative is used as the iodine molecule provider, the poisonous agent of this invention further includes at least one first reaction trigger to enable the iodine-oxygen derivative to release the iodine molecules at the second predetermined temperature. In this way, the relative relationship amount between the second predetermined temperature and the first predetermined temperature can be adjusted by controlling the second predetermined temperature that the first reaction trigger reacts with the iodine-oxygen derivative. Preferably, the second predetermined temperature is selected to be not less than the above-mentioned first predetermined temperature, so that the released iodine molecules can directly react with the lithium atoms. The first reaction trigger is selected from 1) a compound that can provide a sulfur-oxygen bond with a free radical; 2) a compound that can form benzoic acid or phthalic acid isomers; 3) a compound that can form a hydrohalic acid; 4) a compound that can form boron trifluoride, or a mixture of two or more of the above materials. The structure of the sulfur-oxygen bond with the free radical may be

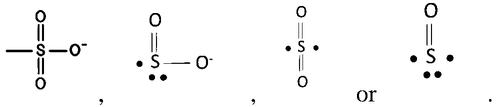

The above-mentioned sulfur-oxygen bond may be located at a free end of the compound, for example, such as sodium trifluoromethanesulfinate (CF₃SO₂Na), perfluorobutanesulfonic acid (C₄F₉SO₃H), sodium perfluorobutanesulfonate (C₄F₉SO₃Na), or potassium perfluorobutanesulfonate (C₄F₉SO₃K). The sulfur-oxygen bond can also be presented in the compound structure, such as LiFSi (lithium bis(fluorosulfonyl)imide) or sodium salt, F-(SO₂)-N⁻-(SO₂)-FM⁺, where M represents lithium or sodium, 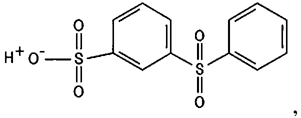 peroxydisulfuric acid, potassium peroxydisulfate, sodium peroxydisulfate. In the form where the sulfur-oxygen bond is not exposed at the free end, a second reaction trigger, such as borofluoride compound, aluminum halide compound, or hydrohalide compound, can be added to break the bond on the side of the sulfur-oxygen bond at a third predetermined temperature, so that the sulfur-oxygen bond becomes a state with a free radical to react with the iodine-oxygen derivative to release the iodine molecule. The above-mentioned borofluoride compound may be potassium tetrafluoroborate (KBF₄), sodium tetrafluoroborate (NaBF₄) or ammonium tetrafluoroborate (NH₄BF₄) or etc. The above-mentioned aluminum halide compound may be aluminum chloride (AlCl₃) or aluminum bromide (AlBr₃) or etc. The above-mentioned hydrohalide compound may be hydrofluoric acid, and the hydrofluoric acid may be produced from lithium hexafluorophosphate (LiPF₆) under a heated environment. The above-mentioned third predetermined temperature is not higher than the second predetermined temperature. However, the second reaction trigger may not be necessarily. For example, the above-mentioned LiFSi (lithium bis(fluorosulfonyl)imide) can directly react with the iodine oxygen derivatives to release iodine molecules.

For example, the first compound with the structure of 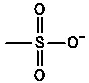 may be sodium octyl sulfate, hexyl sulfate, sodium salt , sodium ethyl sulfate, sodium 1-octanesulfonate monohydrate, 1-octanesulfonic acid sodium salt, sodium 1-heptanesulfonate, sodium hexanesulfonate, sodium dodecyl sulfate, sodium dodecylbenzenesulfonate, sodium 2-ethylhexyl sulfate, sodium ethyl sulfate, potassium nonafluoro-1-butanesulfonate, trifluoromethanesulfonyl chloride, 4-(3-butyl-1-imidazolio)-1-butanesulfonate, 3-(1-pyridinio)-1-propanesulfonate, dimethyl-2-hydroxyethylammoniumpropane sulfonate, 3-(decyldimethylammonio)-propane-sulfonate inner salt, [2-(methacryloyloxy)ethyl]dimethyl-(3-sulfopropyl)ammonium hydroxide, 1-ethyl-3-methylimidazolium ethyl sulfate, copper(I) trifluoromethanesulfonate benzene complex, 1-ethyl-3-methylimidazolium trifluoromethanesulfonate, 1-Fluoropyridinium triflate, 4-formyl-1-methylpyridinium benzenesulfonate, 3-hydroxynaphthalene-2,7-disulfonic acid disodium salt, potassium benzene-1,2-disulfonate, lithium trifluoromethanesulfonate, potassium trifluoromethanesulfonate, sodium bisulfite solution, sodium metabisulfite, sodium thiosulfate, sodium 1-butanesulfonate, potassium diphenylsulfone sulfonate, heptadecafluorooctanesulfonic acid potassium salt), or a mixture of two or more of the above materials.

For example, the first compound with the structure of 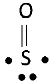 may be phenyl vinyl sulfoxide, propyl sulfoxide, methyl phenyl sulfoxide, diisobutyl sulfoxide, dodecyl methyl sulfoxide, benzyl phenyl sulfoxide, dimethyl sulfite, benzenesulfinic acid sodium salt, sodium methanesulfinate, sodium p-toluenesulfinate, sodium bisulfite solution), or a mixture of two or more of the above materials.

For example, the first compound with the structure of 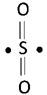 may be 4-(trifluoromethyl)benzenesulfonyl chloride, 4-chlorobenzenesulfonyl chloride, 3-(trifluoromethyl)benzenesulfonyl chloride, 4-fluorobenzenesulfonyl chloride, trifluoromethanesulfonic anhydride, methanesulfonyl chloride, p-toluenesulfonyl chloride, 4-toluenesulfonyl chloride, 3-hydroxynaphthalene-2,7-disulfonic acid disodium salt, isobutanesulfonyl chloride, cyclohexanesulfonyl chloride, 4-methoxybenzenesulfonyl chloride, 4-bromobenzenesulfonyl chloride, 4-(trifluoromethyl)benzenesulfonyl chloride, 4-iodobenzenesulfonyl chloride, 4-fluorobenzenesulfonyl chloride, 4-nitrobenzenesulfonyl chloride, biphenyl-4-sulfonyl chloride, biphenyl-4,4'-disulfonyl chloride, 4-(aminosulfonyl)benzenesulfonyl chloride), or a mixture of two or more of the above materials.

When the second form of the first reaction trigger of this invention is selected from the compound that can form benzoic acid or phthalic acid isomers, this compound may be a compound that having isophthalic acid, orthophthalic acid or terephthalic acid. For example, the precursor of polyimide (PI) can provide the benzoic acid isomers.

The third form of the first reaction trigger of this invention is the compound that can release a hydrohalic acid. This compound is selected from hydrofluoric acid, hydrochloric acid, hydrobromic acid, hydroiodic acid or a mixture of two or more of the above materials. For example, when the compound that can release the hydrohalic acid is the hydrofluoric acid, it can be lithium hexafluorophosphate (LiPF₆), sodium hexafluorophosphate (NaPF₆), potassium hexafluorophosphate (KPF₆), ammonium hexafluorophosphate (NH₄PF₆), lithium tetrafluoroborate (LiBF₄), potassium tetrafluoroborate (NaBF₄), potassium tetrafluoroborate (KBF₄) or ammonium tetrafluoroborate (NH₄BF₄). When it is the hydroiodic acid to release the hydrohalic acid, the compound that can release the hydrohalic acid may be LiPI₆. When it is the hydrobromic acid to release the hydrohalic acid, the compound that can release the hydrohalic acid may be LiPBr₆. When the second reaction trigger is the hydrohalic acid, it can also be selected from the above compounds.

The fourth form of the first reaction trigger of this invention is a compound that can release boron trifluoride (BF₃). This compound may be lithium tetrafluoroborate (LiBF₄), sodium fluoroborate (NaBF₄), potassium fluoroborate (KBF₄), or ammonium fluoroborate (NH₄BF₄), etc., or a mixture of two or more of the above materials.

In operation, at least two or more of the above-mentioned first reaction triggers can also be mixed and used together.

Moreover, the outer surface of the iodine molecule provider may also have a thermal cracking coating layer to control the temperature at which the iodine molecules are released. For example, in the first structure, when the iodine molecule provider in the poisonous agent is the pure iodine, the pure iodine is easier to sublime. Therefore, the second predetermined temperature at which the iodine molecule provider releases the gaseous iodine molecules can be controlled by forming a thermal cracking coating layer on the surface of the iodine molecule provider.

The second structure of this invention requires the polar medium. That is, the electrolyte of the lithium secondary battery is belonged to the type of the polymer having a polar solution or a polar functional group. Therefore, the electrolyte of the lithium secondary battery may be a liquid electrolyte, an organic solid electrolyte, or a mixed electrolyte formed by mixing particles of an inorganic solid electrolyte with at least one of the above liquid electrolyte or organic solid electrolyte. The above liquid electrolyte may be a gel or jelly state. The above-mentioned liquid electrolyte is a mixture of a polar solution and a polymer for presenting viscosity. They can be divided into the gel or jelly state according to the content of the polymer and the viscosity. The viscosity of the jelly state is greater than that of the gel state. The organic solid electrolyte is prepared by using a polymer as the matrix. The polymer with high-polarity functional groups to react with a metal salt to undergo a Lewis acid/base reaction and the complexation and the decomplexation reactions will be occurred continuously for transferring the lithium ions. When the amount of a plasticizer with the polar functional groups in the organic solid electrolyte is higher, the organic solid electrolyte will be called the gel polymer electrolyte.

When the electrolyte has the polar solvent or the polar functional group, the lithium secondary battery may further include a separator that allow the electrolyte to pass, which is disposed between the positive electrode and the negative electrode. The material of the separator may be a ceramic separator with oxide powders as the main body, and the oxide is an oxide solid electrolyte that can transfer lithium ions, such as LATP, LAGP, LLZO, or LiAlSiO₄, or an oxide that cannot transfer lithium ions, such as aluminum oxide.

In the second structure, the iodine molecule provider has to avoid materials that release the iodine molecules below 80°C, so as to prevent the iodine molecules from dissociating into the iodine ions too early in the polar solutions or the polar functional group polymers to form a similar lithium-iodine battery within the lithium secondary battery, resulting in the failure of the lithium secondary battery that can still operate normally and safely. In this structure, the iodine molecule provider may be selected from iodides or iodine oxides that will not melt and release iodine molecules below 80°C, or the above-mentioned thermal cracking coating layer may be formed on the surface of the iodine molecule provider. Besides, in the second structure, because some iodine molecules will contact the polar medium after being released to form the iodine ions, the iodine ions will react with the iodine molecules to form triiodide anions. When the lithium secondary battery is in the discharging state, the anions will be driven to move to the negative electrode, and drive the iodine molecules to move to the negative active materials, thereby improving the reaction efficiency of the iodine molecules and the lithium atoms.

In the above two structures, when the iodine molecule provider is an iodine oxygen derivative, a higher temperature for releasing iodine molecules, i.e. the second predetermined temperature, can be achieved by the presence of the first reaction trigger or the second reaction trigger mentioned above. That is compared with the iodine molecule provider using the pure iodine, the porous adsorption material adsorbed with the pure iodine, and the iodide.

In the first structure in the second structure of this invention, the components with the same name can be selected from the same materials. For example, the optional material examples of the iodine oxygen derivative, and the first reaction trigger and the second reaction trigger described in the second structure can refer to the relevant descriptions in the first structure. Therefore, the repeated descriptions are omitted.

Next, various embodiments of the poisonous agent provided in the lithium secondary battery according to the present invention are described. These embodiments can be mainly divided into two types. The first type is a form in which the poisonous agent does not contact with the electrolyte of the lithium secondary battery. The material of the iodine molecule provider of the poisonous agent is not limited by the type of the electrolyte. The second type is a form in which the poisonous agent is in contact with the electrolyte. In this case, the selected materials of the iodine molecule provider is limited by the different types of the above-mentioned electrolyte.

In the first form in which the poisonous agent does not contact the electrolyte of the lithium secondary battery, the poisonous agent can be arranged outside the lithium secondary battery. The lithium secondary battery has a channel that can connect the external environment of the lithium secondary battery to the electrochemical reaction system, the positive and negative active materials and the electrolyte, of the lithium secondary battery. The channel may be pre-formed and present a closed state when the set temperature, which is not higher than the first predetermined temperature, is not reached. Alternatively, the channel is not pre-formed, but can be formed by some means or reactions, such as etching, or the pressure of the gas generated during the electrochemical reaction process destroying the sealed packaging component, such as the shell, of the electrochemical reaction system, to form a channel.

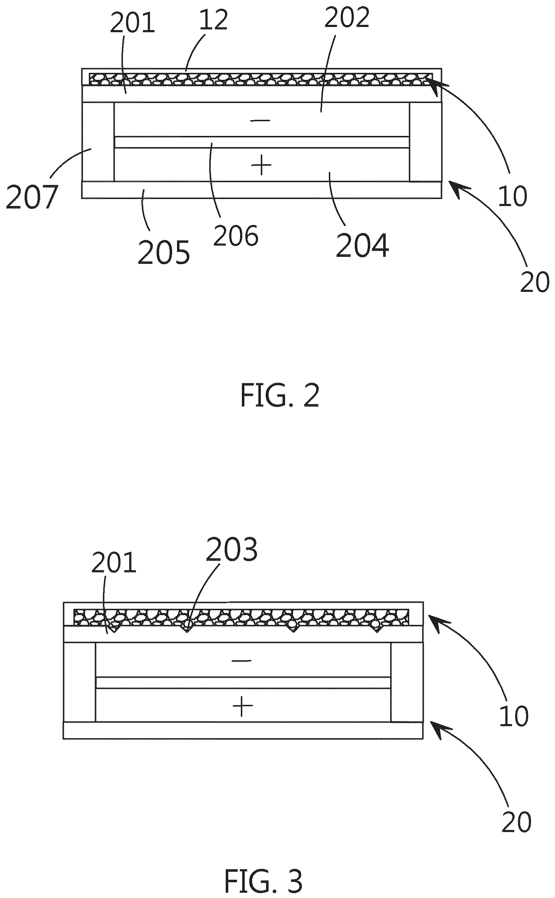

For example, as shown in FIG. 2, the poisonous agent of this invention is disposed on the outer surface of the current collector 201. At least parts of the current collector 201 are composed of a copper material and it serves as a portion of the packaging component of the electrochemical reaction system of the lithium secondary battery 20. When the temperature of the lithium secondary battery reaches or near to the temperature of the poisonous agent for releasing the iodine molecules, the iodine molecules released by the iodine molecule provider would react with the copper material to form a copper iodide compound. Due to the varying in the crystal volume of the copper iodide, the current collector 201 will be broken to form a plurality of holes that penetrate through the current collector 201 to connect to the inside of the lithium secondary battery 20. The poisonous agent 10 can enter continuously into the lithium secondary battery 20 and attack the negative active material 202 adjacent to the current collector 201. The lithium atoms of the negative active material 202 will be converted into stable lithium compounds or lithium ions to achieve safety.

Moreover, iodine molecules can react with copper to form porous and fluffy copper iodide. Therefore, when the poisonous agent of this invention reacts with the copper current collector 201, the copper current collector 201 becomes from a conductive state to an insulating state to effectively terminal the electron transfer path simultaneously. In addition, the surface of the poisonous agent 10 can also be covered with an etching direction limiter 12 to limit the releasing direction of the poisonous agent 10. The material of the etching direction limiter 12 may be selected from a passive metal, glass or polymer that will not react with the iodine molecules. The position of the etching direction limiter 12 on the surface of the poisonous agent 10 can be adjusted as needed.

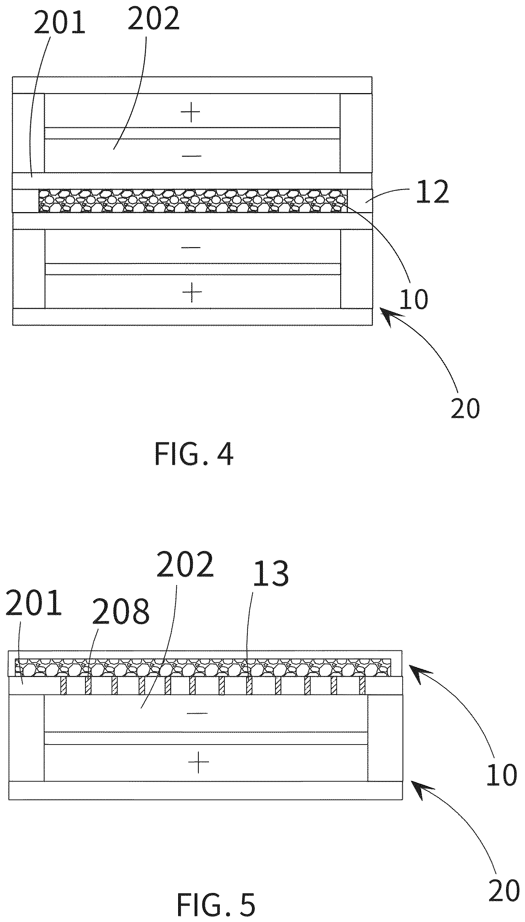

Besides, the auxiliary cutting grooves 203 may be formed on the surface of the current collector 201 to facilitate etching, as shown in FIG. 3. Furthermore, the poisonous agent 10 may be sandwiched between the copper current collectors 201 of two lithium secondary batteries 20, as shown in FIG. 4.

Moreover, the lithium secondary battery in FIG. 3 further includes a positive active material 204, an aluminum current collector 205 adjacent to the positive active material 204, a separator 206 located between the positive electrode 204 and the negative electrode 202, which has ion conduction characteristics and electronic insulation characteristics, a glue frame 207 sandwiched between the aluminum current collector 205 and the copper current collector 201, which serves as a packaging member, together with the current collector 205 and the current collector 201, of the lithium secondary battery 20 to form an enclosed space for accommodating an electrochemical reaction system composed of the positive active material 204, the separator 206, the negative active material 202 and so on. The lithium secondary battery 20 further includes an electrolyte system, which is located in the enclosed space and performs ion transfer between the positive active material 204 and the negative active material 202. Besides, when the electrolyte system is selected from the solid electrolyte form, the electrolyte system can directly serve as a separator.

Furthermore, as shown in FIG. 4, an etching direction limiter 12 may be further provided around the poisonous agent 10, which can not only effectively limit the etching direction of the poisonous agent 10 to prevent overflow to the invalid direction, but also prevent the influence of the external environment on the poisonous agent 10.

In another embodiment, the current collector 201 has a plurality of through holes 208, and the through holes 208 are filled with a filler 13 that can melt or depolymerize at a first predetermined temperature, such as a thermalplastic material (TPM) or a thermally depolymerizable material, to form a path communicating to the negative active material 202, as shown in FIG. 5.

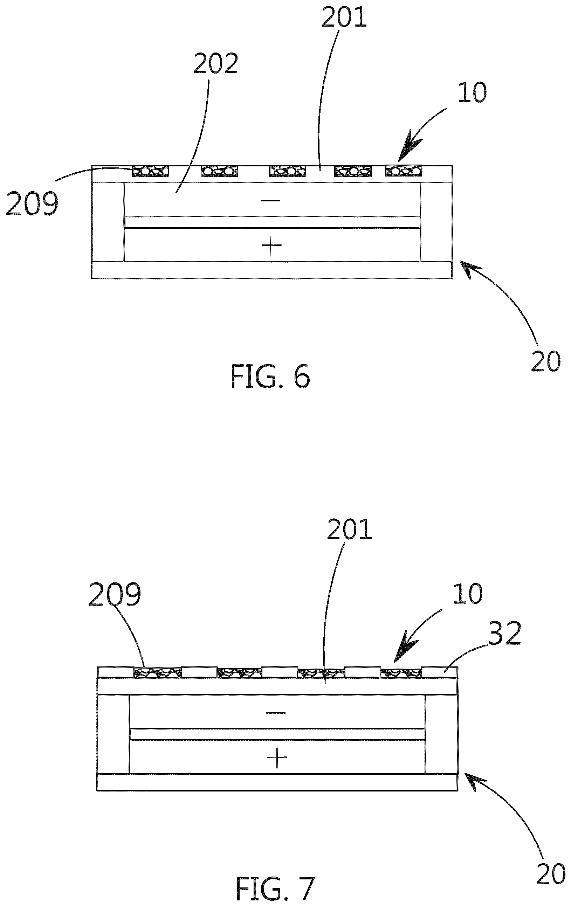

Please refer to FIG. 6, which is another embodiment of this application. In this embodiment, the open-side surface of the current collector 201 has a plurality of recesses 209 to accommodate the poisonous agent 10. By the subsidence of the current collector 201, the thickness of the current collector 201 to be etched is reduced. In another embodiment, as shown in FIG. 7, several etching direction limiters 12 are provided on the surface of the current collector 201 to form the recesses 209 to accommodate the poisonous agent 10 to limit the etching direction to prevent overflow to the invalid direction. In this case, because the poisonous agent 10 of this invention is disposed outside the packaging component of the lithium secondary battery 20, it will not affect the efficiency or composition structure of the lithium secondary battery 20.

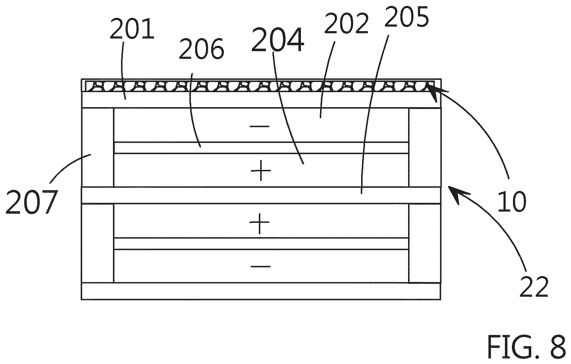

The main difference between the lithium secondary battery 22 shown in FIG. 8 and the lithium secondary battery 20 is that the current collector 205 is coated with active materials on both sides to serve as the positive active materials 204.

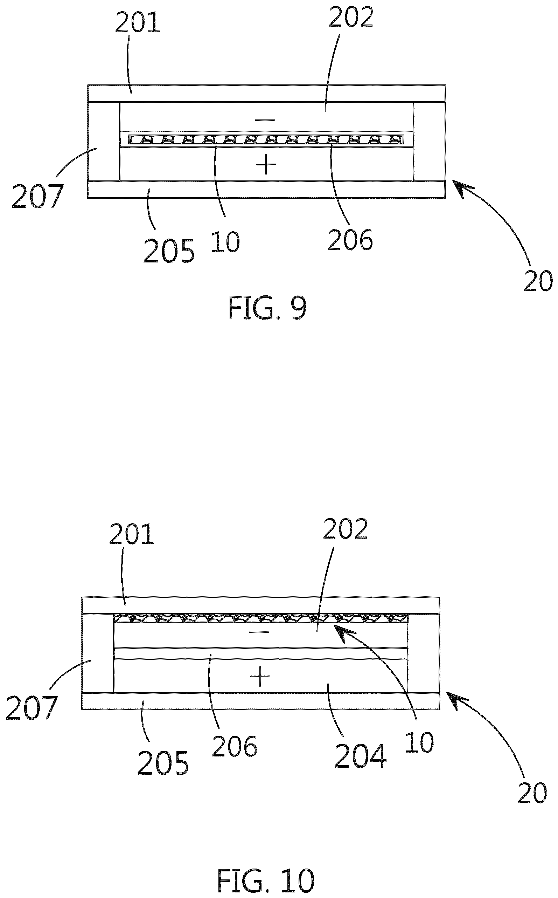

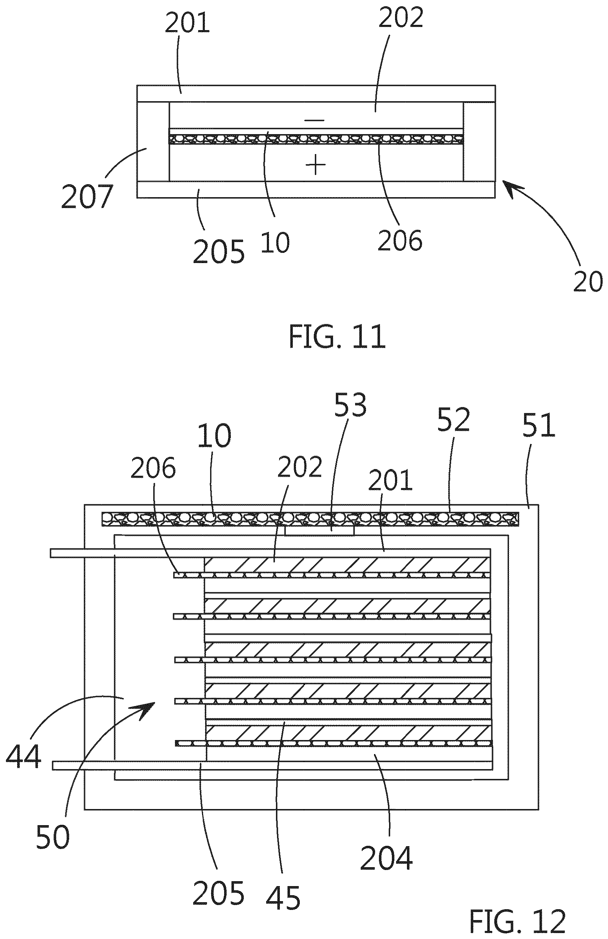

In the second form of the lithium secondary battery deactivator contacting the electrolyte, the lithium secondary battery can be any structural form. For example, a lithium secondary battery with a wound electrode layer, a lithium secondary battery with a cylindrical metal shell as a packaging structure, a prismatic lithium secondary battery, or a sheet-shaped lithium secondary battery with the current collectors serving as a part of the packaging structure showing in FIG. 2. In this state, the poisonous agent is directly disposed at a position that can directly contact the electrolyte. The iodine molecule provider of the poisonous agent will need to be adjusted according to whether the electrolyte includes the polar medium or not as described above. The poisonous agent may be disposed at any place in the electrochemical reaction system of the lithium secondary battery. For example, it may be mixed between the positive current collector and the positive active material, in the positive active material, between the positive active material and the inorganic solid electrolyte, between the inorganic solid electrolyte and the negative active material, etc. Moreover, when the lithium secondary battery has the separator, the poisonous agent may be disposed in the separator 206, as shown in FIG. 9. The separator 206 may be a ceramic separator. Alternatively, as shown in FIG. 10, the poisonous agent 10 of this invention may be disposed on the surface of the current collector 201 in contact with the negative active material 202. Furthermore, as shown in FIG. 11, the poisonous agent 10 of this invention may also be disposed on the surface of the negative active material 202. Of course, the poisonous agent 10 of this invention may be mixed in the electrolyte.

Please refer to FIG. 12. When the lithium secondary battery uses an aluminum-plastic film 51 as a packaging component, a receiving recess 52 may be formed at the pressing seam of the inner surface of the aluminum-plastic film 51 to accommodate the lithium secondary battery deactivator 10. In addition, the receiving recess 52 is further provided with a groove 53 to communicate to the electrochemical reaction system 50 of the lithium secondary battery. In case of the receiving recess 52 being able to maintain isolation from the electrolyte at the temperature lower than the temperature before the poisonous agent is activated, the material of the iodine molecule releasing agent of the poisonous agent accommodated in the receiving recess 52 is the same with the material of that, which is arranged outside the lithium secondary battery, and may not be affected by whether the electrolyte has polar components or not. However, in case of the receiving recess being unable to maintain isolation from the electrolyte at the temperature lower than the temperature before the poisonous agent is activated, the material of the iodine molecule releasing agent accommodated in the receiving recess 52 will be affected by whether the electrolyte has polar components or not.

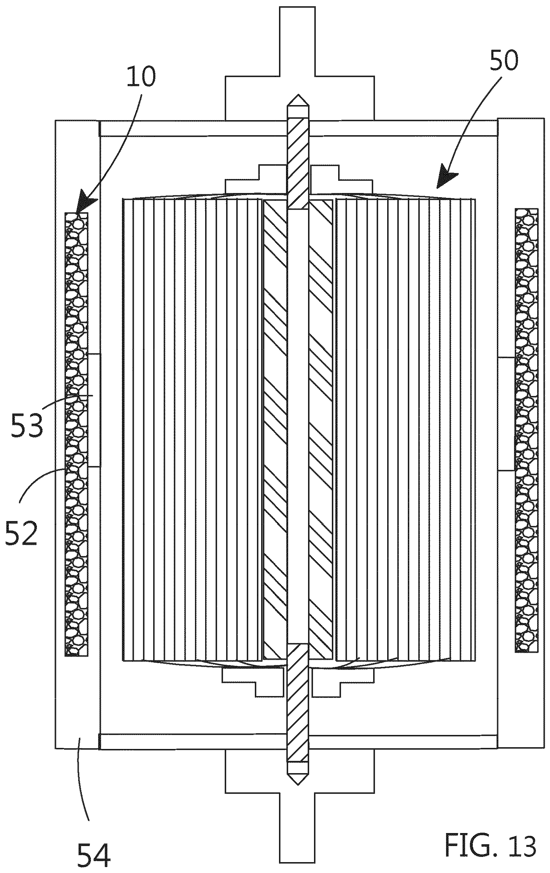

Similarly, when the lithium secondary battery uses a metal shell 54 as a packaging component, the metal shell 54 may also be formed with the receiving recess 52 and the groove 53 which is for communicating the receiving recess 52 and the electrochemical reaction system 50. The receiving recess 52 is used to accommodate the poisonous agent 10, as shown in FIG. 13. In this embodiment, as above mentioned, the material of the iodine molecule releasing agent accommodated in the receiving recess 52 will be affected by whether the receiving recess being able to maintain isolation from the electrolyte at the temperature lower than the temperature before the poisonous agent is activated or not.

Besides, when the poisonous agent is an iodine oxygen derivative as the iodine molecule provider, and the poisonous agent has the first reaction trigger or even together with the second reaction trigger, these components may be arranged at different positions of the electrochemical reaction system. For example, one component is mixed with the negative active material, or mixed with the oxide particles as the main body of the separator, or coated on the surface of the negative electrode. The reaction trigger is distributed in the electrolyte. The material of the oxide particles of the above-mentioned separator may be selected from solid electrolytes that can transfer lithium ions, such as LATP, LAGP, LLZO, LiAlSiO₄, or the oxides that is passive for the ability to transfer lithium ions, such as aluminum oxide.

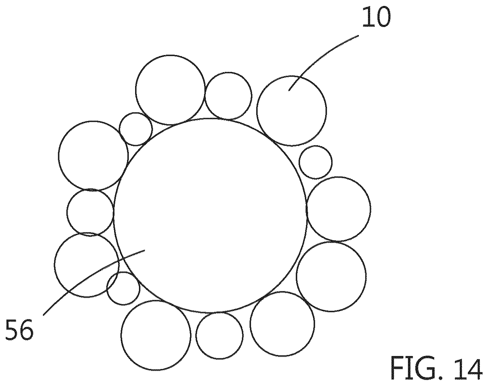

The poisonous agent 10 of this invention may also be granulated and attached to the surface of the negative active material particles 56 through an adhesive to form a spherical structure, as shown in FIG. 14. The adhesive may be selected from polyacrylic acid (PAA), polyimide, polyamide-imide (PAI), polyvinylidene difluoride (PVDF), polyvinylidene fluoride-co-hexafluoropropylene (PVDF-HFP), polyurethane (PU), polytetrafluoroethylene (PTFE) or a mixture of two or more of these materials.

Accordingly, this invention provides a lithium secondary battery capable of self-poisoning, which is adding a poisonous agent that can release iodine molecules into the lithium secondary battery. Also, the selection and configuration of materials are made according to the requirements to set the first predetermined temperature, the second predetermined temperature, or even the third predetermined temperature. The lithium secondary battery can activate the poisonous agent at its own temperature. The iodine molecules react with the lithium atoms with high activity to form the stable lithium compounds or lithium ions, so as to render the lithium secondary battery inoperable, achieve self-poisoning and effectively suppress thermal runaway.

The above description is only a preferred embodiment of this invention and is not intended to limit the scope of the claims. Therefore, any equivalent variations or modifications made in accordance with the features and spirit of this invention should be included within the scope of the following claims.

### Reference numbers

- 10: poisonous agent
- 12: etching direction limiter
- 13: filler
- 20: lithium secondary battery
- 201: current collector
- 202: negative active material
- 203: auxiliary cutting groove
- 204: positive active material
- 205: current collector
- 206: separator
- 207: glue frame
- 208: through hole
- 209: recess
- 44: electrolyte
- 45: shared current collector
- 50: electrochemical reaction system
- 51: aluminum-plastic film
- 52: receiving recess
- 53: groove
- 54: metal shell
- 56: negative active material particles

## Claims

1. A lithium secondary battery capable of self-poisoning, comprising:
a positive active material;
a negative active material, containing lithium atoms;
an electrolyte, located between the positive active material and the negative active material to allow lithium ions to move between the positive active material and the negative active material; and
a poisonous agent, containing an iodine molecule provider releasing iodine molecules to the negative active material;
wherein a temperature of the lithium secondary battery reaches a first predetermined temperature, the iodine molecules react with the negative active material to form a stable lithium compounds or lithium ions, and wherein the first predetermined temperature is greater than 100°C.

2. The lithium secondary battery capable of self-poisoning according to claim 1, wherein iodine molecule provider is a pure iodine, a porous adsorption material adsorbed with pure iodine, an iodide or an iodine oxygen derivative, and the electrolyte is an inorganic all-solid electrolyte.

3. The lithium secondary battery capable of self-poisoning according to claim 2, wherein the iodine molecule provider is selected from a manganese iodide, a copper iodide, a cuprous iodide, a magnesium iodide, a calcium iodide, an ammonium iodide, an aluminum iodide, a hydrogen iodide, or a mixture of two or more of the above materials.

4. The lithium secondary battery capable of self-poisoning according to claim 1, wherein the iodine molecule provider is an iodine oxygen derivative or an iodide that does not melt below 80°C, and the electrolyte has a polar solvent or a polar functional group.

5. The lithium secondary battery capable of self-poisoning according to claim 4, wherein the electrolyte is selected from a gel electrolyte having a polar solvent, a jelly electrolyte having a polar solvent, a solid electrolyte having a polar functional group or a mixture of at least two of the above materials.

6. The lithium secondary battery capable of self-poisoning according to claim 5, wherein the electrolyte is further mixed with an inorganic solid electrolyte particle.

7. The lithium secondary battery capable of self-poisoning according to claim 2 or 4, wherein when the iodine molecule provider is the iodine-oxygen derivative, the iodine-oxygen derivative is selected from a compound having iodic acid (HIO₃), periodic acid (HIO₄), iodine oxide (XOI), iodate (XIO₃), periodate (XIO₄), iodic acid hydride (XmHn(IO₃)₂), periodic acid hydride (XmHn(IO₆) or a mixture of two or more of the above materials, and wherein X is a metal and m≧1, n≧1.

8. The lithium secondary battery capable of self-poisoning according to claim 2 or 4, wherein when the iodine molecule provider is an iodine-oxygen derivative, the poisonous agent further comprises a first reaction trigger, which is selected from a compound that can provide a sulfur-oxygen bond having a free radical, lithium bis(fluorosulfonyl)imide, a compound that can form benzoic acid or phthalic acid isomers, a compound that can form a hydrohalic acid, a compound that can form boron trifluoride, or a mixture of two or more of the above materials.

9. The lithium secondary battery capable of self-poisoning according to claim 8, wherein when the first reaction trigger is the compound that can provide the sulfur-oxygen bond having the free radical, the lithium secondary battery deactivator further comprises a second reaction trigger selected from borofluoride compound, aluminum halide compound or hydrohalide compound.

10. The lithium secondary battery capable of self-poisoning according to claim 4, wherein when the electrolyte has the polar solvent or the polar functional group, the lithium secondary battery further comprises a separator, which is disposed between the positive electrode and the negative electrode and allows the electrolyte to pass through, and wherein the separator is a ceramic separator with oxide powders as the main body, and the oxide is an oxide solid electrolyte that can transfer lithium ions or an oxide that cannot transfer lithium ions.

11. The lithium secondary battery capable of self-poisoning according to claim 1, wherein the first predetermined temperature is more than 120°C.

12. The lithium secondary battery capable of self-poisoning according to claim 1, wherein the poisonous agent is in granular form.

13. The lithium secondary battery capable of self-poisoning according to claim 1, wherein a free end of the positive active material is disposed with a positive current collector, and a free end of the negative active material is disposed with a negative current collector.

14. The lithium secondary battery capable of self-poisoning according to claim 13, wherein the poisonous agent is arranged on a free end surface of the negative current collector, and the positive current collector and the negative current collector serve a packaging elements of the lithium secondary battery.

15. The lithium secondary battery capable of self-poisoning according to claim 14, wherein the free end surface of the negative current collector has a plurality of auxiliary cutting flutes.

16. The lithium secondary battery capable of self-poisoning according to claim 14, wherein an etching direction limiter surrounds the poisonous agent, and the etching direction limiter is inactive to the iodine molecules.

17. The lithium secondary battery capable of self-poisoning according to claim 14, wherein the negative current collector includes a plurality of through holes, and the through holes are filled with hot melt material (TPM) or thermal depolymerization material.

18. The lithium secondary battery capable of self-poisoning according to claim 14, wherein the negative current collector includes at least one recess on the free end surface to accommodate the iodine molecule provider.

19. The lithium secondary battery capable of self-poisoning according to claim 1, further comprising an aluminum plastic film, which is used as a packaging component of the lithium secondary battery, and wherein an inner surface of the aluminum plastic film contacting the electrolyte has a receiving recess to accommodate the poisonous agent.

20. The lithium secondary battery capable of self-poisoning according to claim 1, wherein further comprising a metal packing case, which is used as a packaging component of the lithium secondary battery, and wherein the metal packing case has a receiving recess to accommodate the poisonous agent.

21. The lithium secondary battery capable of self-poisoning according to claim 1, wherein the poisonous agent is in granular form and adheres to a surface of particles of the negative active material through an adhesive, and the adhesive is selected from polyacrylic acid, polyimide, polyamide imide, polyvinylidene fluoride, polyvinylidene fluoride-co-hexafluoropropylene, polyurethane, polytetrafluoroethylene or a mixture of two or more of the above materials.

22. The lithium secondary battery capable of self-poisoning according to claim 1, wherein the negative active material is a lithium metal or a material that can form an alloy with lithium.

23. The lithium secondary battery capable of self-poisoning according to claim 1, wherein the negative active material is composed of stacked silicon particles and carbon particles.

24. The lithium secondary battery capable of self-poisoning according to claim 1, wherein the negative active material is a mixture of crystalline and amorphous states, and an amount of the negative active material with amorphous state is more than 10% of the total volume, and wherein the respective particle sizes of the silicon particles and the carbon particles are 1 nanometer to 10 nanometers.
